# FASCICULE DE BREVET EUROPEEN

(11) **EP 3 013 740 B1**
(45) Date de publication et mention de la délivrance du brevet: **16.10.2019**
(21) Numéro de dépôt: 14750246.2
(22) Date de dépôt: 26.06.2014
(51) Int. Cl.: C01B 3/34, C10J 3/80

(54) **PROCÉDÉ DE CHAUFFE PAR COMBUSTION ET INSTALLATION POUR SA MISE EN OEUVRE**
HEIZVERFAHREN MIT DIREKTBEFEUERUNG UND ANLAGE ZUR IMPLEMENTIERUNG DAVON
DIRECT-FIRED HEATING METHOD AND FACILITY FOR IMPLEMENTING SAME

(30) Priorité: 26.06.2013 FR 1356132; 26.06.2013 FR 1356136; 26.06.2013 FR 1356141; 10.12.2013 FR 1362343; 10.12.2013 FR 1362346; 10.12.2013 FR 1362347
(43) Date de publication de la demande: 04.05.2016
(73) Titulaire: L'Air Liquide Société Anonyme pour l'Etude et l'Exploitation des Procédés Georges Claude, 75007 Paris (FR); Air Liquide France Industrie, 75007 Paris (FR)
(72) Inventeur: BEAUDOIN, Philippe, F-78280 Guyancourt (FR); DEL-GALLO, Pascal, F-91410 Dourdan (FR); FLIN, Matthieu, 75018 Paris (FR)
(74) Mandataire: De Vleeschauwer, Natalie Y.L.D.
(86) Numéro de dépôt international: PCT/FR2014/051622
(87) Numéro de publication internationale: WO 2014/207391

(56) Documents cités:
- WO-A1-2009/046522
- US-A- 4 756 750
- US-A1- 2003 008 928
- US-A1- 2012 134 888
- US-A1- 2013 126 172
- US-B1- 6 837 910

## Description

La présente invention concerne les procédés industriels de chauffe dans lequel une charge est introduite dans un four et chauffée en brûlant un combustible dans le four.

De tels procédés de chauffe industriels sont par exemple :
- la vitrification, comme par exemple la fusion de verre,
- la fusion des métaux, comme par exemple la seconde fusion de métaux, et
- le réchauffage des métaux.

Le procédé de chauffe peut être continu ou discontinu.

Les procédés industriels de chauffe font généralement appel à des combustibles d'origine fossile tels que le gaz naturel, du fioul, du charbon.

La combustion peut être une combustion à l'air ou une combustion avec un oxydant ayant une teneur en oxygène supérieure à celle de l'air, tel que de l'air enrichi en oxygène ou de l'oxygène substantiellement pur. La combustion avec un oxydant plus riche en oxygène que l'air est connue sous la dénomination oxy-combustion.

L'oxy-combustion possède de nombreux avantages par rapport à la combustion à l'air également appelée aérocombustion :
- réduction des émissions de NOx,
- réduction du volume de fumées générées,
- réduction de la consommation de combustible et donc aussi des émissions de CO₂ d'origine fossile.

Cette réduction de la consommation de combustible est toutefois limitée quand on compare l'oxy-combustion avec des procédés d'aérocombustion qui permettent le préchauffage de l'air de combustion par récupération de chaleur des fumées générées par la combustion.

Pour améliorer la performance économique de l'oxy-combustion, on cherche à réduire encore plus la consommation de combustible par :
- le type et le design du brûleur oxy-combustible,
- le design de la chambre de combustion permettant notamment un abaissement de la température des fumées à la sortie du four, une réduction des pertes thermiques, etc.,
- le préchauffage de l'oxydant et/ou le combustible par récupération de chaleur des fumées générées.

Cependant, ces techniques plafonnent relativement rapidement et l'écart entre le procédé avec oxy-combustion le plus performant et le procédé de combustion à l'air préchauffé le plus performant reste faible. Ceci restreint le marché de l'oxy-combustion dans les procédés de chauffe industriels.

US-A-20090011290 décrit un procédé de récupération thermochimique. Selon ce procédé, une partie des fumées issues du four de combustion est utilisée comme réactif pour le reformage d'un combustible. Le combustible réformé est brûlé dans le four de combustion. Avant d'être utilisées comme réactif pour le reformage, les fumées issues du four sont utilisées comme fluide caloporteur pour le préchauffage de l'oxydant de combustion et du combustible réformé dans des récupérateurs en amont de leur introduction dans le four de combustion.

Une telle utilisation des fumées pour le préchauffage de combustible et de comburant dans des récupérateurs n'est possible dans une installation industrielle que lorsque les fumées sont pauvres en polluants (condensables) susceptibles de se déposer sur les parois des récupérateurs.

EP-A-1143200 divulgue un procédé de combustion dans un four, tel qu'un four de fusion de verre, dans lequel on utilise comme combustible des produits de synthèse issus d'une réaction chimique endothermique, tels que le gaz de synthèse ou syngaz. La production desdits produits de synthèse a lieu dans deux régénérateurs qui fonctionnent en alternance et qui sont chauffés par des fumées venant d'une source autre que le four dans lequel les produits de synthèse sont utilisés comme combustible.

WO 2009/046522 décrit un procédé de gazéification intégré avec récupération de chaleur.

En effet, les fumées issues d'un four de fusion de verre sont fortement chargées de matières condensables. Ladite autre source de fumées peut être une autre installation sur le site industriel qui produit de la fumée relativement propre ou une installation pour la combustion d'un combustible avec de l'air spécifiquement prévue pour la production de fumées chaudes pour le chauffage des deux régénérateurs.

Le premier cas de figure n'est envisageable que s'il existe une installation produisant des fumées relativement propres à proximité du four et dans ce cas, la mise en oeuvre du procédé de combustion dans le four dépendra du fonctionnement simultané de cette autre installation. Le deuxième cas de figure nécessite la construction et l'opération d'une installation de combustion additionnelle, ce qui est particulièrement onéreux.

Dans tout les cas, le procédé décrit dans EP-A-1143200 n'améliore pas significativement le bilan énergétique du four dans la mesure où ledit procédé dépend d'une source d'énergie thermique extérieure additionnelle.

La présente invention est faite dans le cadre des techniques de réduction de consommation de combustible et réduction des émissions CO₂ d'origine fossile dans les procédés de chauffe industriels à haute température. Elle a pour but de remédier au moins partiellement aux problèmes associés aux procédés connus décrits ci-dessus.

La présente invention couvre en particulier un procédé de chauffe par combustion.

Selon ce procédé, on introduit une charge à chauffer dans un four. On brûle du combustible avec de l'oxydant dans le four. On chauffe la charge dans le four (300) avec la chaleur générée par cette combustion et on évacue la charge chauffée du four. Les fumées générées par la combustion sont également évacuées du four, ces fumées évacuées contenant de l'énergie thermique résiduelle qui n'a pas été absorbée par la charge dans le four.

Selon le procédé, on produit également du syngaz dans un réacteur de synthèse, et ceci par réaction chimique endothermique entre des réactifs incluant, d'une part, une matière carbonée et, d'autre part, de la vapeur d'eau (102) et/ou du CO₂. A cette fin, le réacteur de synthèse comporte au moins une zone de réaction dans laquelle on introduit les réactifs, dans laquelle la réaction chimique endothermique a lieu et d'où on extrait le syngaz produit.

Suivant la présente invention, on récupère de l'énergie thermique résiduelle des fumées évacuées et on introduit au moins une partie de l'énergie thermique résiduelle récupérée dans le réacteur de synthèse où cette au moins une partie de l'énergie thermique résiduelle récupérée est consommée par la réaction chimique endothermique susmentionnée.

Au moins une partie du syngaz produit par la réaction est introduit dans le four de manière à ce qu'au moins une partie du combustible brûlé dans le four soit du syngaz issue du réacteur de synthèse.

L'invention permet ainsi d'améliorer l'efficacité énergétique du procédé en récupérant au moins une partie de l'énergie résiduelle évacuée du four avec les fumées, en utilisant au moins une partie de l'énergie résiduelle récupérée pour la synthèse de syngaz et en utilisant au moins une partie du syngaz produit en tant que combustible pour la génération de chaleur dans le four.

Suivant une forme de réalisation particulière, le réacteur de synthèse comporte non seulement au moins une zone de réaction, mais également au moins une enceinte de chauffage dans laquelle on introduit la au moins une partie de l'énergie résiduelle récupérée.

Dans ce cas, la au moins une enceinte de chauffage est positionnée par rapport à la au moins une zone de réaction de manière à ce que de l'énergie thermique récupérée soit transmise de l'enceinte de chauffage vers la zone de réaction à travers une paroi de séparation séparant la zone de réaction de l'enceinte de chauffage.

Chaque zone de réaction est par exemple entourée d'une enceinte de chauffage voisine ou logée entre deux enceintes de chauffage voisines. Suivant une forme de réalisation avantageuse, le réacteur de synthèse (100) a une structure lamellaire comportant une alternance d'enceintes de chauffage et de zones de réaction : une enceinte de chauffage, suivie d'une zone de réaction, suivie d'une enceinte de chauffage, etc. Lesdites enceintes de chauffage et lesdites zones de réaction sont alors situées entre deux lamelles successives.

Suivant une forme de réalisation particulièrement avantageuse, on effectue une récupération d'énergie thermique supplémentaire sur le syngaz produit dans le réacteur.

A cette fin, on fait circuler le syngaz chaud obtenu à la fin de la réaction de synthèse dans une enceinte de chauffage, dite enceinte de chauffage supplémentaire, située à l'intérieur du réacteur de synthèse de manière à ce qu'au moins une partie de la chaleur du syngaz produit soit transférée à la au moins une zone de réaction. Ledit transfert est à nouveau réalisé à travers une paroi de séparation qui sépare l'enceinte de chauffage supplémentaire et la au moins une zone de réaction.

Cette forme de réalisation de l'invention est particulièrement utile dans le cas où on extrait de l'eau du syngaz avant son utilisation comme combustible dans le four (voir ci-après).

Suivant une forme de réalisation particulière, on introduit de l'énergie thermique dans la au moins une enceinte de chauffage en introduisant un ou des flux de fumées évacuées dans ladite au moins une enceinte en tant que source(s) d'énergie thermique.

Une telle forme de réalisation est notamment utile quand les fumées évacuées ne contiennent peu ou pas de poussières et ne contiennent peu ou pas de substances volatiles qui peuvent se déposer à l'intérieur des enceintes de chauffage ou condenser aux températures qui règnent dans la ou les enceintes, notamment au niveau des parois de séparation avec la ou les zones de réaction.

Il est en principe envisageable de dépoussiérer les fumées évacuées à température élevée avant l'introduction d'un ou plusieurs flux de fumées évacuées dans la ou les enceintes de chauffage, mais un tel procédé de dépoussiérage est généralement coûteux.

Suivant une forme de réalisation de l'invention, on récupère de l'énergie thermique des fumées évacuées par échange thermique avec un fluide caloporteur.

On récupère alors de l'énergie thermique résiduelle des fumées évacuées du four par échange thermique avec un fluide caloporteur de manière à obtenir un fluide caloporteur chauffé contenant de l'énergie thermique résiduelle récupérée. Au moins une partie dudit fluide caloporteur chauffé est ensuite introduite dans le réacteur de synthèse et utilisée comme source d'énergie thermique pour la réaction chimique endothermique. Dans ce cas on introduit avantageusement de l'énergie thermique dans la au moins une enceinte de chauffage en introduisant au moins une partie du fluide caloporteur chauffé dans la au moins une enceinte de chauffage.

Les fumées issues du four sont souvent chargées de poussières et/ou de substances volatiles susceptibles de condenser à des températures dans la plage dite « plage de condensation », généralement de 600°C à 800°C et en particulier de 600°C à 700°C. La poussière et/ou les substances condensables peuvent être issues de la combustion qui a lieu dans le four, notamment quand le syngaz n'est pas le seul combustible brûlé. La poussière et/ou les substances condensables présentes dans les fumées peuvent également avoir d'autres origines, telles que, par exemple, l'entrainement ou la volatilisation d'une partie de la charge à chauffer ou fondre dans le four.

Suivant une forme de réalisation préférée de l'invention, l'étape de récupération d'énergie thermique comporte au moins une première phase de récupération à une première plage de températures de fumées et une deuxième phase de récupération à une deuxième plage de températures.

La première plage de températures est alors choisie de manière à ce qu'il n'y ait pas de condensation de substances volatiles présentes dans les fumées à ces températures. Quand les fumées issues du four sont chargées de substances volatiles telles que définies ci-dessus, on choisit donc comme première plage de températures une plage supérieure à la plage de condensation.

Entre la première et la deuxième phase de récupération, les fumées sont soumises à un nettoyage qui comporte l'élimination de poussières et/ou de substances volatiles susceptibles de condenser aux températures de la deuxième plage de températures.

Du fait que, à ce stade, les fumées sont partiellement refroidies, ce nettoyage est possible à un coût réduit.

Quand les fumées contiennent des substances volatiles telles que définies ci-dessus, l'étape de nettoyage permet une récupération d'énergie thermique des fumées supplémentaire et efficace dans la deuxième plage de températures même si cette deuxième plage recouvre ou est inférieure à la plage de condensation.

La présente invention permet ainsi une récupération effective et durable d'énergie thermique présente dans les fumées évacuées du four, même si lesdites fumées évacuées sont chargées de poussières et/ou de substances condensables. La récupération d'énergie thermique résiduelle pendant la première et/ou la deuxième phase de récupération peut notamment être réalisée, comme décrit ci-dessus, par échange thermique entre les fumées évacuées et un fluide caloporteur et/ou le transfert de l'énergie résiduelle récupérée vers la réaction chimique endothermique peut être réalisé au moyen d'une ou plusieurs enceintes de chauffage, comme également décrit ci-dessus. Suivant une forme de réalisation particulière, un même fluide caloporteur est utilisé dans la première et dans la deuxième phase de récupération.

Dans ce cas, on chauffe de préférence le fluide caloporteur partiellement par échange thermique avec les fumées dans la deuxième phase de récupération de l'étape, c'est-à-dire à la deuxième plage de températures des fumées. Le fluide caloporteur partiellement chauffé dans cette deuxième phase de récupération est ensuite chauffé par échange thermique avec les fumées dans la première phase de récupération, c'est-à-dire à la première plage de températures des fumées qui est supérieure à la deuxième plage.

La matière carbonée des réactifs de la réaction chimique endothermique est avantageusement une matière carbonée gazeuse, de préférence du gaz naturel ou du méthane.

Cette matière carbonée, telle que, par exemple le gaz naturel, est avantageusement soumise à une étape d'hydrotraitement en amont de la réaction chimique endothermique. De manière utile :
- on introduit du H₂ dans la matière carbonée dans un réacteur catalytique d'hydrogénation, de manière à transformer le S présent dans la matière carbonée en H₂S mais également à transformer le Cl éventuellement présent dans la matière carbonée en HCl et à transformer les composés carbonés insaturés en composés carbonés saturés
- on sépare ensuite le H₂S et le HCl ainsi formés de la matière carbonée.

La séparation du H₂S et du HCl formé de la matière carbonée est de préférence réalisé par adsorption.

Il est notamment possible d'adsorber le H₂S dans un lit d'oxyde de Zn et le HCl, si du Cl était présent dans la matière carbonée, sur un lit d'adsorbant à base de potassium. Le lit d'absorbant est changé quand un niveau donné de saturation est atteint et remplacé par un nouveau lit d'absorbant.

La matière carbonée peut également dans le cas du gaz naturel subir une étape préalable dite de préreformage se déroulant dans un réacteur spécifique et visant à éliminer les hydrocarbures lourds (contenant plus de deux atomes de carbones).

Cette étape peut être réalisée en amont du réacteur de synthèse afin d'éviter d'éventuels problèmes de formation de carbone solide par craquage thermique de ces hydrocarbures dans le réacteur de synthèse. Il est également possible de produire du syngaz dans deux réacteurs de synthèse fonctionnant en alternance.

Suivant une forme de mise en oeuvre préférée, on brûle dans le four au moins une partie, voire la totalité du combustible avec un oxydant riche en oxygène. Par oxydant riche en oxygène, on comprend un oxydant ayant une teneur en oxygène supérieure à la teneur en oxygène de l'air. De préférence, l'oxydant riche en oxygène présente une teneur en oxygène d'au moins 80%vol, encore de préférence d'au moins 90% vol et plus de préférence encore d'au moins 95%vol, voire d'au moins 99%vol, et jusqu'à 100% vol.

Ainsi, le procédé suivant l'invention peut être un procédé utilisant de l'air enrichi en oxygène comme oxydant ; un procédé avec oxyboosting, c'est-à-dire un procédé dans lequel moins de 25% mais moins de 100% de la chaleur générée par la combustion du combustible dans le four est générée par combustion avec un oxydant ayant une teneur en oxygène d'au moins 80% vol ; un procédé de combustion mixte aéro-oxy, c'est-à-dire un procédé dans lequel au moins 25% de la chaleur générée par la combustion du combustible est générée par combustion dans le four avec un oxydant ayant une teneur en oxygène d'au moins 80% vol, le restant étant généré par combustion avec de l'air comme oxydant ; ou encore un procédé tout-oxy, c'est-à-dire un procédé dans lequel la totalité de la chaleur générée par combustion dans le four est générée avec un oxydant ayant une teneur en oxygène d'au moins 80% vol.

Le four peut être un four de réchauffe ou un four de fusion. Le four peut notamment être un four de vitrification, tel que par exemple un four de fusion de verre comportant au moins une des structures suivantes : une chambre de fusion, une chambre d'affinage et un feeder de verre. La chambre de fusion peut également être une chambre de fusion-affinage intégrant une zone de fusion et une zone d'affinage.

Le four peut aussi être un four de fusion de métaux, tel que par exemple un four de seconde fusion de métaux comme de l'aluminium, du plomb, etc.

La réaction chimique endothermique est typiquement du SMR (Steam Methane Reforming, en français reformage de méthane à la vapeur) ou du DMR (Dry Methane Reforming, en français reformage à sec de méthane) ou un mixte des deux.

Suivant une forme de réalisation, au moins une partie des fumées évacuées, voire des fumées nettoyées obtenues dans l'étape de récupération, est utilisée comme réactif dans le procédé chimique endothermique de l'étape pour la production de syngaz.

En effet, ces fumées nettoyées contiennent du CO₂ et de la vapeur d'eau et peuvent donc être utilisées comme réactif dans la réaction chimique endothermique.

Quand le procédé comporte une deuxième phase de récupération, on récupère avantageusement, au moins dans la première phase de l'étape de récupération et de préférence dans la première et la deuxième phase de l'étape de récupération, de l'énergie thermique des fumées par échange thermique avec un fluide caloporteur. L'échange thermique entre les fumées et le fluide caloporteur se réalise de manière avantageuse au moyen d'un ou plusieurs récupérateurs.

Ainsi, on utilisera de manière utile un premier récupérateur pour l'échange thermique entre les fumées et le fluide caloporteur dans la première phase de l'étape de récupération et un deuxième récupérateur pour cet échange thermique dans la deuxième phase de cette étape de récupération.

Les fluides caloporteurs préférés sont l'air, l'azote et la vapeur.

Quand le fluide caloporteur est de la vapeur, il est possible d'utiliser au moins une partie du fluide caloporteur chauffé dans l'étape de récupération, c'est-à-dire de la vapeur ainsi chauffée dans l'étape de récupération, comme réactif dans le procédé chimique endothermique pour la production de syngaz.

Le fluide caloporteur peut être utilisé dans un circuit ouvert, par exemple avec de l'air comme fluide caloporteur ou quand le fluide caloporteur est de la vapeur qui est ensuite utilisée comme réactif. Le fluide caloporteur peut aussi être utilisé en circuit fermé.

Dans ce cas, on renvoie au moins une partie du fluide caloporteur vers l'étape de récupération après son utilisation comme source d'énergie thermique dans la réaction chimique endothermique.

Quand l'énergie thermique récupérée des fumées évacuées est plus élevée que l'énergie thermique consommée par la réaction chimique endothermique, le surplus d'énergie thermique récupérée peut être utilisé à d'autres fins, en parallèle à ou en aval de la réaction chimique endothermique/le réacteur de synthèse.

Ainsi, il est possible d'utiliser une partie de l'énergie thermique récupérée pour préchauffer la matière carbonée avant son utilisation comme réactif dans la réaction chimique endothermique.

Une autre possibilité est d'utiliser une partie de l'énergie thermique récupérée pour générer et/ou surchauffer de la vapeur avant son utilisation comme réactif dans la réaction chimique endothermique et/ou d'utiliser une partie de l'énergie thermique récupérée pour préchauffer du CO₂ avant son utilisation comme réactif dans la réaction chimique endothermique.

Une partie de l'énergie thermique récupérée peut également être utilisée pour préchauffer l'oxydant en amont de son utilisation pour la combustion du combustible.

De manière avantageuse, on extrait de l'eau du syngaz par condensation avant son utilisation comme combustible dans le four.

La présente invention concerne également une installation de chauffe adaptée pour la mise en oeuvre du procédé suivant l'une quelconque des formes de réalisations décrites ci-dessus.

Une telle installation comporte notamment les équipements suivants :
- un réacteur de synthèse de syngaz,
- un four muni d'un ou plusieurs brûleurs pour la combustion d'un combustible avec un oxydant et au moins une sortie de fumées,
- une installation de récupération d'énergie thermique par échange thermique entre les fumées et un fluide caloporteur et comportant une sortie de fluide caloporteur chauffé.

Suivant l'invention, lesdits équipements sont reliés de manière à permettre la mise en oeuvre du procédé suivant l'invention. Ceci implique notamment que :
- le réacteur de synthèse soit relié au four de manière à permettre la fourniture de syngaz produit dans le réacteur comme combustible à au moins un brûleur du four.
- la sortie des fumées du four soit reliée à l'installation de récupération d'énergie thermique de manière à permettre la fourniture de fumées issues du four à ladite installation de récupération.
- la sortie du fluide caloporteur chauffé de l'installation de récupération d'énergie thermique soit reliée au réacteur de synthèse de syngaz de manière à permettre la fourniture d'au moins une partie du fluide caloporteur chauffé au réacteur de synthèse.

Suivant une forme de réalisation préférée, l'installation de récupération comporte un premier équipement de récupération d'énergie thermique et un deuxième équipement de récupération d'énergie thermique. Le premier et le deuxième équipement sont de préférence des échangeurs de chaleur tels que décrits ci-dessus. La sortie des fumées du four est alors reliée au premier équipement de récupération d'énergie thermique de manière à permettre la fourniture de fumées issues du premier équipement issues du four audit premier équipement. Le premier équipement est avantageusement relié à une installation de nettoyage de fumées de manière à permettre la fourniture de fumées issues du premier équipement à l'installation de nettoyage.

L'installation de nettoyage est à son tour reliée au deuxième équipement de récupération d'énergie thermique de manière à permettre la fourniture de fumées nettoyées issues de l'installation de nettoyage audit deuxième équipement de récupération.

L'installation de récupération d'énergie thermique comporte de préférence au moins un échangeur de chaleur qui permet la récupération d'énergie thermique des fumées par échange thermique avec un fluide caloporteur.

L'installation suivant l'invention peut être adaptée pour la mise en oeuvre de l'une quelconque des formes de réalisation du procédé de chauffe suivant l'invention. Ainsi, pour la combustion d'un combustible avec un comburant, le four n'est pas seulement relié à une ou des sources de combustible, et en particulier au moins au réacteur de synthèse comme source de syngaz en tant que combustible, mais également à une ou plusieurs sources d'oxydant.

Suivant une forme de réalisation avantageuse, le four est relié à au moins une source d'un oxydant ayant une teneur en oxygène supérieure à la teneur en oxygène de l'air. Ledit oxydant est fourni comme comburant à au moins un brûleur du four. De manière utile, ledit oxydant présente une teneur en oxygène supérieure à 80% vol O₂, de préférence à 90% vol O₂, encore de préférence supérieure à 95% vol O₂, et plus de préférence encore supérieure à 99% vol O₂.

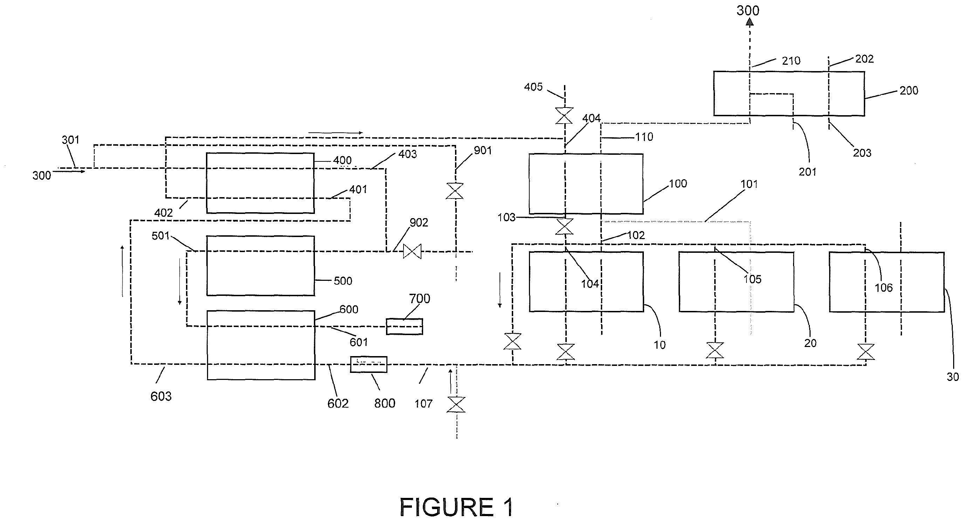

L'exemple comparatif ci-après décrit plus en détail la présente invention et ses avantages, référence étant faite à la figure qui est une représentation schématique d'un procédé/d'une installation de chauffe suivant l'invention utilisant du gaz naturel comme matière carbonée pour la synthèse de syngaz par SMR. La figure illustre plus particulièrement un tel procédé/une telle installation suivant l'invention qui est particulièrement adapté(e) pour le chauffage d'un four de fusion de verre.

Suivant l'exemple, le syngaz est synthétisé dans le réacteur de synthèse 100 par réaction catalytique endothermique entre du gaz naturel préchauffé 101 et de la vapeur 102, ces deux réactifs ayant une température à l'entrée du réacteur 100 d'au moins 300°C, plus particulièrement de 325°C.

Le syngaz 110 généré par SMR catalytique dans le réacteur 100 et composé majoritairement de H₂ et de CO est ensuite envoyé vers le four 300 (non illustré) dans lequel le syngaz 110 sert de combustible. Dans le four 300, l'énergie thermique générée par cette combustion est utilisée pour la fusion de matières vitrifiables. Le tableau 1 donne la composition et le PCI (Pouvoir Calorifique Inférieur) du syngaz ainsi généré à partir du gaz naturel et compare le PCI de 1 Nm³ du syngaz généré avec le PCI du 0,209 Nm³ de gaz naturel (CH₄) consommé pour la production de 1 Nm³ de syngaz.

**Tableau 1**

| Composition du syngaz | | |
|---|---|---|
| CH₄ | 0,25% | |
| H₂O | 13,28% | |
| H₂ | 65,78% | |
| CO | 16,98% | |
| CO₂ | 3,71% | |
| PCI | 2229,04 | kcal/Nm3* |
| PCI de 1 Nm³ | 2229,04 | Kcal |
| Δ énergie syngaz- gaz naturel | 25% | |
| | | |

| Gaz naturel | | |
|---|---|---|
| PCI | 8534 | kcal/Nm3* |
| PCI de 0,209 Nm³ | 1784 | Kcal |

Le syngaz 110 généré dans le réacteur 100 peut directement être dirigé vers le four 300 ou, comme dans le cas illustré, peut d'abord subir une étape de condensation au moins partielle de la vapeur contenue dans le syngaz avant son utilisation en tant que combustible.

Ceci permet d'augmenter le PCI du syngaz et de contrôler (réduire) l'humidité dans l'atmosphère du four. Cette condensation a lieu dans le condenseur 200. L'eau récupérée 201 peut, par exemple, être utilisée pour la production de la vapeur 102 en amont du réacteur 100. De préférence, on récupère l'énergie de condensation d'eau. On peut ainsi utiliser de l'eau de refroidissement 202 pour la condensation de la vapeur dans le condenseur 200, et utiliser l'eau/la vapeur chauffée 203 issue du condenseur 200 pour la production de vapeur 102 en amont du réacteur 100 ou, plus généralement, comme source d'énergie thermique.

Le syngaz sec 210 issu du condenseur 200 est ensuite dirigé vers le four 300 où le syngaz sec 210 est utilisé comme combustible.

Dans le cas illustré, le syngaz est le seul combustible utilisé dans le four 300. Le four est un four tout oxy, c'est-à-dire que le seul comburant utilisé dans le four est un oxydant ayant une teneur en oxygène de 80% vol à 100% vol.

Suivant une autre forme de réalisation, le syngaz peut être utilisé en combinaison avec un autre combustible.

De manière analogue, le four peut également combiner d'une part de l'oxy-combustion telle que définie ci-dessus avec d'autre part, un oxydant moins riche en oxygène, tel que par exemple de l'air.

Les fumées 301 générées par la combustion sont évacuées du four 300. Elles sont à température élevée, de l'ordre de 1250°C dans l'exemple illustré. Elles sont d'abord envoyées vers un premier récupérateur 400, dit récupérateur haute température. Dans ce premier récupérateur 400, les fumées sont utilisées pour chauffer un fluide caloporteur (de l'air dans le cas illustré). Au moins une partie 404 du fluide caloporteur 402 ainsi chauffé est envoyée vers le réacteur 100 et y est utilisée comme source d'énergie pour la réaction chimique endothermique de synthèse de syngaz.

Une autre partie 405 du fluide caloporteur chauffé 402 est dirigée vers d'autres équipements consommateurs de chaleur.

Dans le cas illustré, l'air utilisé comme fluide caloporteur est chauffé à une température de 800°C dans le premier récupérateur 400. Le premier récupérateur 400 est opéré de manière à ce que les substances volatiles présentes dans les fumées 301 ne condensent pas à l'intérieur dudit premier récupérateur. Dans le cas illustré, les fumées 403 sont évacuées du premier récupérateur à une température de 800°C.

Quand les fumées évacuées du four 300 sont chargées de particules (poussières), on veille à maintenir la vitesse d'écoulement desdites fumées à l'intérieur du premier récupérateur 400 à un niveau suffisamment élevé pour éviter une accumulation de particules à l'intérieur dudit premier récupérateur 400.

Ces fumées tempérées 403 sont envoyées vers une installation de nettoyage 500. Dans cette installation, lesdites fumées 403 sont soumises à un traitement de nettoyage, c'est-à-dire à un traitement d'élimination de poussières et/ou à une étape d'élimination de substances volatiles condensables.

Les procédés de nettoyage utilisés sont choisis de manière à éviter un refroidissement trop important des fumées lors du traitement de nettoyage de manière à limiter des pertes d'énergie thermique lors du nettoyage. On choisira par exemple un nettoyage au moyen de filtres haute température.

Les fumées nettoyées 501 sont dirigées vers un deuxième récupérateur 600, dit récupérateur de basse température.

Dans ce deuxième récupérateur, on récupère de l'énergie résiduelle des fumées nettoyées 501 par échange thermique avec un fluide caloporteur 602. Les fumées refroidies 601 sont ensuite dirigées vers un extracteur 700 avant d'être libérées dans l'atmosphère ou d'être traitées et captées.

Grâce au nettoyage des fumées dans l'installation de nettoyage, étape de nettoyage dans laquelle on élimine desdites fumées les substances volatiles susceptibles de condenser aux températures des fumées dans le récupérateur basse température 600, il est possible de récupérer de l'énergie thermique résiduelle des fumées sans encrassement du récupérateur basse température 600. La présente invention permet ainsi une récupération optimale de la chaleur présente dans les fumées 301 à la sortie du four 300.

Dans le cas illustré, le fluide caloporteur 602 pour le deuxième récupérateur 600 est de l'air comprimé fourni par la soufflante 800.

Il est possible d'utiliser deux fluides caloporteur différents 401, 602 pour le premier et le deuxième récupérateur 400, 600 et d'utiliser les deux fluides caloporteur ainsi chauffés 402, 603 comme sources d'énergie thermique dans le procédé suivant l'invention, par exemple dans le réacteur de synthèse 100.

Dans le cas illustré, le même fluide caloporteur est utilisé dans le premier et le deuxième récupérateur 400, 600.

L'air comprimé 602 fourni par la soufflante 800 est d'abord envoyé vers le récupérateur basse température 600. Dans ledit récupérateur 600, l'air est chauffé par échange thermique avec les fumées nettoyées 501 issues de l'installation de nettoyage 500. L'air (fluide caloporteur) ainsi chauffé 603, qui dans le cas illustré est à une température de l'ordre de 500°C, est ensuite introduit dans le récupérateur haute température 400.

Dans le récupérateur haute température 400, l'air chauffé issu du premier récupérateur basse température 600 est à nouveau chauffé par échange thermique avec les fumées non nettoyées 301 issues du four 300. Dans le cas illustré, l'air (fluide caloporteur) chaud 402 sort du récupérateur haute température à environ 800°C.

Afin de permettre un meilleur contrôle de la température des fumées à l'entrée du premier récupérateur 400 et/ou de l'installation de nettoyage 500 (par exemple, pour des raisons de résistance thermique des matériaux et pour optimiser le nettoyage), des canalisations sont prévues pour l'injection à débit contrôlé d'un gaz tempéré 901, 902 respectivement dans les fumées 301 en amont du premier récupérateur et/ou dans les fumées 403 en amont de l'installation de nettoyage 500. Le gaz tempéré peut, par exemple, être de l'air ambiant et/ou une partie du fluide caloporteur 107 à la sortie du réacteur 100 et/ou des récupérateurs/échangeurs 10, 20, ou 30.

L'énergie thermique résiduelle présente dans le fluide caloporteur 103 à la sortie du réacteur 100 est avantageusement utilisée pour le préchauffage des réactifs utilisés dans le procédé suivant l'invention.

Ainsi, dans le cas illustré, une première partie 104 du fluide caloporteur est dirigée vers le récupérateur/la chaudière 10 pour la génération de la vapeur 102 utilisée pour la synthèse du syngaz.

Une deuxième partie 105 du fluide caloporteur est dirigée vers un récupérateur 20 pour le préchauffage de la matière carbonée (gaz naturel) pour la réaction de synthèse de syngaz.

Une troisième partie 106 de fluide caloporteur est dirigée vers un deuxième récupérateur 30 pour le préchauffage du comburant (oxygène) avant son introduction dans le four.

Il est également possible d'utiliser au moins une partie du fluide caloporteur 103 issu du réacteur 100 pour le préchauffage du syngaz 210 en amont du four 300.

Si un deuxième combustible est également brûlé dans le four 300, au moins une partie du fluide caloporteur 103 peut être utilisée pour le préchauffage du deuxième combustible et/ou du syngaz 210 en amont du four 300.

On peut, par exemple, utiliser une partie du gaz naturel préchauffé dans l'échangeur 20 comme combustible dans le four 300.

On cherche en général à récupérer et à utiliser un maximum de l'énergie thermique présente dans les fumées 301 à la sortie du four.

Dans le cas illustré, le fluide caloporteur circule en circuit fermé, c'est-à-dire que le fluide caloporteur issu du réacteur 100 est réutilisé comme fluide caloporteur 602 dans les récupérateurs 600 et 400. Il est également possible d'utiliser le fluide caloporteur en circuit ouvert.

Le rendement énergétique du procédé suivant l'invention appliqué à un four de fusion de verre a été comparé au rendement énergétique des procédés connus les plus efficaces pour la fusion de verre.

Dans les tableaux 2 à 3 ci-après :
- AA₁ : concerne un four de fusion de verre suivant l'art antérieur utilisant de la combustion de gaz naturel avec comme comburant de l'air préchauffé au moyen de régénérateurs neufs ;
- AA₂ : concerne un four de fusion de verre suivant l'art antérieur utilisant de la combustion de gaz naturel avec de l'oxygène non-préchauffé comme comburant ;
- AA₃ : concerne un four de fusion de verre suivant l'art antérieur utilisant de la combustion de gaz naturel avec de l'oxygène préchauffé au moyen de la technologie développée par la demanderesse telle que décrite dans EP-A-0872690;
- Inv 1 : concerne la mise en oeuvre du procédé suivant l'invention dans un four de fusion de verre avec combustion du syngaz généré comme seul combustible dans le four avec de l'oxygène préchauffé comme comburant.

Le tableau 2 donne une comparaison entre le procédé suivant l'invention (ex 1) et les trois procédés suivant l'art antérieur (AA1 à AA3) pour un apport technique ou procédé de fusion identique à celui réalisé dans l'exemple AA1 avec une consommation de gaz naturel, utilisé comme combustible dans le four, de 100 Nm³/h.

Le tableau 3 donne une comparaison entre le procédé suivant l'invention et les trois procédés suivant l'art antérieur pour une tirée identique du four de fusion de verre.

**Tableau 2**

| | | AA 1 | AA2 | AA3 | Inv 1 |
|---|---|---|---|---|---|
| Combustible : Gaz naturel | Nm³/h | 100 | 102 | 93 | |
| Température combustible | °C | 25 | 25 | 450 | 450 |
| Combustible :Syngaz | Nm³/h | | | | 350 |
| **Consommation globale gaz naturel (combustion et/ou production de syngaz)** | Nm³/h | 100 | 102 | 93 | 73 |
| Δ Consommation globale **gaz naturel par rapport à AA2** | | | | **-8%** | **-28%** |
| Δ **Total gaz naturel par rapport à AA1** | | | **2%** | **-7%** | **-27%** |
| Air de combustion | Nm³/h | 1000 | | | |
| Température air de combustion | °C | 1200 | | | |
| Oxygène (100%) | Nm³/h | | 204 | 188 | 146 |
| Température oxygène de combustion | °C | | 25 | 550 | 550 |
| Énergie fournie au four | kW | 1462 | 1008 | 989 | 1039 |
| Enthalpies évacuées avec les fumées | kW | 694 | 240 | 221 | 271 |
| Apport thermique au procédé de fusion | kW | 768 | 768 | 768 | 768 |

**Tableau 3**

| Exemple | | AA 1 | AA2 | AA3 | Inv 1 |
|---|---|---|---|---|---|
| Combustible : gaz naturel | Nm³/h | 900 | 828 | 762 | |
| Combustible : syngaz | Nm³/h | | | | 2852 |
| Température combustible | °C | 25 | 25 | 450 | 450 |
| | | | | | |
| Consommation globale gaz naturel (combustion et/ou production de syngaz) | Nm³/h | 900 | 828 | 762 | 597 |
| Δ Consommation globale gaz naturel par rapport à AA1 | | | -8% | -15% | -34% |
| Débit comburant : air | Nm³/h | 8900 | | | |
| Débit comburant : oxygène (100%) | Nm³/h | | 1630 | 1498 | 1155 |
| Température comburant | °C | 1200 | 25 | 550 | 550 |
| Débit fumées de combustion | Nm³/h | 10918 | 3326 | 3129 | 3744 |
| Température fumées à la sortie du four | °C | 1450 | 1450 | 1450 | 1450 |

## Revendications

1. Procédé de chauffe par combustion, procédé dans lequel :
(a) on introduit une charge à chauffer dans un four,
(b) on brûle du combustible avec de l'oxydant avec génération de chaleur et des fumées dans le four (300),
(c) on chauffe la charge dans le four (300) avec la chaleur générée,
(d) on évacue la charge chauffé et les fumées générées du four (300), les fumées évacuées (301) contenant de l'énergie thermique résiduelle,
(e) on produit du syngaz (110) dans un réacteur de synthèse (100) par réaction chimique endothermique entre des réactifs incluant (i) une matière carbonée et (ii) de la vapeur d'eau (102) et/ou du CO₂, le réacteur de synthèse comportant au moins une zone de réaction dans laquelle on introduit les réactifs et dans laquelle la réaction chimique endothermique a lieu et d'où on extrait le syngaz produit,
**caractérisé en ce que** :
• on récupère de l'énergie thermique résiduelle des fumées évacuées (301) du four (300), au moins une partie de l'énergie thermique résiduelle ainsi récupérée étant introduite dans le réacteur de synthèse (100) et consommée par la réaction chimique endothermique de l'étape (e), et
• au moins une partie du combustible brûlé dans le four dans l'étape (b) est du syngaz (110, 210) produit dans l'étape (e).

2. Procédé suivant la revendication 1, dans lequel le réacteur de synthèse (100) comporte également au moins une enceinte de chauffage dans lequel on introduit ladite au moins une partie de l'énergie thermique résiduelle récupérée, ladite au moins une enceinte de chauffage étant positionnée par rapport à la au moins une zone de réaction de manière à ce que de l'énergie thermique résiduelle récupérée soit transférée de la au moins une enceinte de chauffage vers la réaction chimique endothermique dans la au moins une zone de réaction à travers au moins une paroi de séparation entre la au moins une enceinte de chauffage et la au moins une zone de réaction.

3. Procédé suivant la revendication 2, dans lequel chaque zone de réaction est entourée d'une enceinte de chauffage voisine ou logée entre deux enceintes de chauffage voisines.

4. Procédé suivant la revendication 2 ou 3, dans lequel le réacteur de synthèse (100) a une structure lamellaire comportant une alternance d'enceintes de chauffage et de zones de réaction, lesdites enceintes de chauffage et zones de réaction étant situées entre deux lamelles successives.

5. Procédé suivant la revendication 1, dans lequel on récupère de l'énergie thermique résiduelle des fumées évacuées (301, 501) par échange thermique entre les fumées évacuées (301, 501) et un fluide caloporteur (602, 401) de manière à obtenir des fumées tempérées (601) et du fluide caloporteur chauffé (402) contenant l'énergie thermique résiduelle récupérée, au moins une partie du fluide caloporteur chauffé (402) étant introduite dans le réacteur de synthèse (100) afin de fournir la au moins une partie de l'énergie thermique résiduelle récupérée à la réaction chimique endothermique de l'étape (e).

6. Procédé suivant l'une des revendications 2 à 4, dans lequel on récupère de l'énergie thermique résiduelle des fumées évacuées (301, 501) par échange thermique entre les fumées évacuées (301, 501) et un fluide caloporteur (602, 401) de manière à obtenir des fumées tempérées (601) et du fluide caloporteur chauffé (402) contenant l'énergie thermique résiduelle récupérée, au moins une partie du fluide caloporteur chauffé (402) étant introduite dans la au moins une enceinte de chauffage afin de fournir la au moins une partie de l'énergie thermique résiduelle récupérée à la réaction chimique endothermique de l'étape (e) à travers la au moins une paroi de séparation.

7. Procédé suivant l'une des revendications 1 à 6, dans lequel les fumées évacuées sont chargées de poussières et/ou de substances volatiles susceptibles de condenser à des températures entre 600°C et 800°C et dans lequel l'étape de récupération d'énergie thermique résiduelle des fumées évacuées (301) du four (300) comporte au moins une première phase de récupération à une première plage de températures des fumées et une deuxième phase de récupération à une deuxième plage de températures des fumées plus basse que la première plage et dans lequel :
• aux températures de la première plage de températures, il n'y a pas de condensation des substances volatiles présentes dans les fumées, et
• les fumées sont soumises à un nettoyage entre la première et la deuxième phase de récupération, ledit nettoyage comportant l'élimination de poussières et/ou de substances volatiles qui sont susceptibles de condenser aux températures de la deuxième plage de températures.

8. Procédé suivant la revendication 7, dans lequel on chauffe un fluide caloporteur (602) partiellement par échange thermique avec les fumées (501) dans la deuxième phase de récupération et dans lequel on chauffe le fluide caloporteur partiellement chauffé (603, 401) dans la première phase de récupération par échange thermique avec les fumées (301) dans la première phase de récupération.

9. Procédé suivant la revendication 7 ou 8, dans lequel le fluide caloporteur est choisi parmi de l'air, de l'azote et de la vapeur (102).

10. Procédé de chauffe suivant l'une quelconque des revendications précédentes, dans lequel on brûle dans le four (300) au moins une partie et de préférence la totalité du combustible avec un oxydant riche en oxygène.

11. Procédé suivant la revendication 8, dans lequel le four (300) est un four de vitrification ou un four de fusion de métaux.

12. Procédé suivant l'une des revendications précédentes, dans lequel la réaction chimique endothermique est du SMR ou du DMR ou un mixte des deux.

13. Procédé suivant l'une quelconque des revendications précédentes, dans lequel on utilise une partie de l'énergie thermique récupérée des fumées évacuées à au moins une et de préférence plusieurs des fins suivantes :
a) pour préchauffer la matière carbonée avant son utilisation comme réactif dans la réaction chimique endothermique ;
b) pour générer et/ou surchauffer de la vapeur avant son utilisation comme réactif dans la réaction chimique endothermique ;
c) pour préchauffer du CO₂ avant son utilisation comme réactif dans la réaction chimique endothermique ;
d) pour préchauffer l'oxydant en amont de son utilisation pour la combustion du combustible.

14. Procédé suivant l'une quelconque des revendications précédentes, dans lequel on extrait de l'eau du syngaz par condensation avant son utilisation comme combustible dans le four (300).

15. Installation de chauffe adaptée pour la mise en oeuvre du procédé suivant l'une quelconque des revendications précédentes, ladite installation comportant :
- un four (300) muni d'une entrée pour une charge à chauffer, d'une sortie pour la charge chauffé, d'un ou plusieurs brûleurs pour la combustion d'un combustible avec un oxydant et la génération de chaleur pour chauffer la charge et d'au moins une sortie de fumées,
- une installation (400, 500, 600) de récupération d'énergie thermique par échange thermique entre les fumées évacuées (301) et un fluide caloporteur (602) et comportant une sortie de fluide caloporteur chauffé, et
- un réacteur de synthèse de syngaz (100),
**caractérisée en ce que** :
- le réacteur de synthèse (100) est relié au four (300) de manière à permettre la fourniture de syngaz produit (210) dans le réacteur (100) comme combustible à au moins un brûleur du four (300) ;
- la sortie des fumées du four (300) est reliée à l'installation de récupération d'énergie thermique (400, 500, 600) de manière à permettre la fourniture de fumées (301) issues du four (300) à ladite installation de récupération (400, 500, 600),
- la sortie du fluide caloporteur chauffé (402) de l'installation de récupération d'énergie thermique (400, 500, 600) est reliée au réacteur de synthèse (100) de syngaz de manière à permettre la fourniture d'au moins une partie du fluide caloporteur chauffé (402) au réacteur de synthèse (100).

## Patentansprüche

1. Heizverfahren durch Verbrennung, wobei in dem Verfahren:
(a) eine zu erwärmende Charge in einen Ofen eingeführt wird,
(b) Brennstoff mit Oxidationsmittel mit Erzeugung von Wärme und Rauchgasen in dem Ofen (300) verbrannt wird,
(c) die Charge in dem Ofen (300) mit der erzeugten Wärme erwärmt wird,
(d) die erwärmte Charge und die aus dem Ofen (300) erzeugten Rauchgase abgeführt werden, wobei die abgeführten Rauchgase (301) restliche thermische Energie enthalten,
(e) Synthesegas (110) in einem Synthesereaktor (100) durch endotherme chemische Reaktion zwischen Reaktanden, die (i) ein kohlenstoffhaltiges Material und (ii) Wasserdampf (102) und/oder CO₂ beinhalten, erzeugt wird, wobei der Synthesereaktor mindestens eine Reaktionszone aufweist, in die die Reaktanden eingeführt werden und in der die endotherme chemische Reaktion stattfindet und aus der das erzeugte Synthesegas extrahiert wird,
**dadurch gekennzeichnet, dass**:
- die restliche thermische Energie aus den aus dem Ofen (300) abgeführten Rauchgasen (301) zurückgewonnen wird, wobei mindestens ein Teil der so zurückgewonnenen restlichen thermischen Energie in den Synthesereaktor (100) eingeführt und durch die endotherme chemische Reaktion von Schritt (e) verbraucht wird, und
- mindestens ein Teil des im Ofen in Schritt (b) verbrannten Brennstoffs Synthesegas (110, 210) ist, das in Schritt (e) erzeugt wird.

2. Verfahren nach Anspruch 1, wobei der Synthesereaktor (100) auch mindestens eine Heizkammer aufweist, in die der mindestens eine Teil der zurückgewonnenen restlichen thermischen Energie eingeführt wird, wobei die mindestens eine Heizkammer in Bezug auf die mindestens eine Reaktionszone so angeordnet ist, dass die zurückgewonnene restliche thermische Energie von der mindestens einen Heizkammer auf die endothermische chemische Reaktion in der mindestens einen Reaktionszone durch mindestens eine Trennwand zwischen der mindestens einen Heizkammer und der mindestens einen Reaktionszone übertragen wird.

3. Verfahren nach Anspruch 2, wobei jede Reaktionszone von einer benachbarten Heizkammer umgeben oder zwischen zwei benachbarten Heizkammern untergebracht ist.

4. Verfahren nach Anspruch 2 oder 3, wobei der Synthesereaktor (100) eine lamellare Struktur besitzt, die einen Wechsel von Heizkammern und Reaktionszonen aufweist, wobei sich die Heizkammern und Reaktionszonen zwischen zwei aufeinanderfolgenden Lamellen befinden.

5. Verfahren nach Anspruch 1, wobei restliche thermische Energie aus den abgeführten Rauchgasen (301, 501) durch Wärmeaustausch zwischen den abgeführten Rauchgasen (301, 501) und einem Wärmeträgerfluid (602, 401) zurückgewonnen wird, um gemäßigte Rauchgase (601) und erwärmtes Wärmeträgerfluid (402) zu erhalten, das die zurückgewonnene restliche thermische Energie enthält, wobei mindestens ein Teil des erwärmten Wärmeträgerfluids (402) in den Synthesereaktor (100) eingeführt wird, um den mindestens einen Teil der restlichen thermischen Energie bereitzustellen, die in der endothermen chemischen Reaktion von Schritt (e) zurückgewonnen wird.

6. Verfahren nach einem der Ansprüche 2 bis 4, wobei die restliche thermische Energie aus den abgeführten Rauchgasen (301, 501) durch Wärmeaustausch zwischen den abgeführten Rauchgasen (301, 501) und einem Wärmeträgerfluid (602, 401) zurückgewonnen wird, um gemäßigte Rauchgase (601) und erwärmtes Wärmeträgerfluid (402) zu erhalten, das die zurückgewonnene restliche thermische Energie enthält, wobei mindestens ein Teil des erwärmten Wärmeträgerfluids (402) in die mindestens eine Heizkammer eingeführt wird, um den mindestens einen Teil der restlichen thermischen Energie, die in der endothermen chemischen Reaktion von Schritt (e) zurückgewonnen wird, durch die mindestens eine Trennwand bereitzustellen.

7. Verfahren nach einem der Ansprüche 1 bis 6, wobei die abgeführten Rauchgase mit Staub und/oder flüchtigen Substanzen beladen werden, die bei Temperaturen zwischen 600 °C und 800 °C imstande sind, zu kondensieren, und wobei der Schritt der Rückgewinnung von restlicher thermischer Energie aus den abgeführten Rauchgasen (301) des Ofens (300) mindestens eine erste Rückgewinnungsphase bei einem ersten Rauchgastemperaturbereich und eine zweite Rückgewinnungsphase bei einem zweiten Rauchgastemperaturbereich unterhalb des ersten Bereichs aufweist und wobei:
- bei den Temperaturen des ersten Temperaturbereichs keine Kondensation von in den Rauchgasen vorhandenen flüchtigen Substanzen stattfindet, und
- die Rauchgase zwischen der ersten und zweiten Rückgewinnungsphase einer Reinigung unterzogen werden, wobei die Reinigung die Entfernung von Staub und/oder flüchtigen Substanzen aufweist, die bei Temperaturen des zweiten Temperaturbereichs imstande sind, zu kondensieren.

8. Verfahren nach Anspruch 7, wobei ein Wärmeträgerfluid (602) in der zweiten Rückgewinnungsphase teilweise durch Wärmeaustausch mit den Rauchgasen (501) erwärmt wird und wobei das teilweise erwärmte Wärmeträgerfluid (603, 401) in der ersten Rückgewinnungsphase durch Wärmeaustausch mit den Rauchgasen (301) in der ersten Rückgewinnungsphase erwärmt wird.

9. Verfahren nach Anspruch 7 oder 8, wobei das Wärmeträgerfluid ausgewählt ist aus Luft, Stickstoff und Dampf (102).

10. Heizverfahren nach einem der vorstehenden Ansprüche, wobei zumindest ein Teil und vorzugsweise der gesamte Brennstoff im Ofen (300) mit einem sauerstoffreichen Oxidationsmittel verbrannt wird.

11. Verfahren nach Anspruch 8, wobei der Ofen (300) ein Verglasungsofen oder ein Metallschmelzofen ist.

12. Verfahren nach einem der vorstehenden Ansprüche, wobei die endotherme chemische Reaktion SMR oder DMR oder eine Kombination aus beidem ist.

13. Verfahren nach einem der vorstehenden Ansprüche, wobei ein Teil der aus den abgeführten Rauchgasen zurückgewonnenen thermische Energie für mindestens einen und vorzugsweise mehrere der folgenden Zwecke verwendet wird:
a) um das kohlenstoffhaltige Material vor seiner Verwendung als Reaktand in der endothermen chemischen Reaktion vorzuwärmen;
b) um Dampf zu erzeugen und/oder zu überhitzen, bevor er als Reaktand in der endothermen chemischen Reaktion verwendet wird;
c) um CO₂ vorzuwärmen, bevor es als Reaktand in der endothermen chemischen Reaktion verwendet wird;
d) um das Oxidationsmittel, stromaufwärtig zu seiner Verwendung zur Brennstoffverbrennung vorzuwärmen.

14. Verfahren nach einem der vorstehenden Ansprüche, wobei Wasser aus dem Synthesegas durch Kondensation extrahiert wird, bevor es als Brennstoff im Ofen (300) verwendet wird.

15. Heizanlage, die zur Implementierung des Verfahrens nach einem der vorstehenden Ansprüche ausgelegt ist, wobei die Anlage Folgendes aufweist:
- einen Ofen (300), der mit einem Einlass für eine zu erwärmende Charge, einem Auslass für die erwärmte Charge, einem oder mehreren Brennern zum Verbrennen eines Brennstoffs mit einem Oxidationsmittel und zur Wärmeerzeugung zum Erwärmen der Charge und mindestens einem Rauchgasauslass versehen ist,
- eine Anlage (400, 500, 600) zur Rückgewinnung von thermischer Energie durch Wärmeaustausch zwischen den abgeführten Rauchgasen (301) und einem Wärmeträgerfluid (602), und einen Auslass für erwärmtes Wärmeträgerfluid aufweisend, und
- einen Synthesereaktor für Synthesegas (100),
**dadurch gekennzeichnet, dass**:
- der Synthesereaktor (100) mit dem Ofen (300) verbunden ist, um die Zufuhr von produziertem Synthesegas (210) in dem Reaktor (100) als Brennstoff zu mindestens einem Brenner des Ofens (300) zu ermöglichen;
- der Rauchgasauslass des Ofens (300) mit der Anlage zur Rückgewinnung von thermischer Energie (400, 500, 600) verbunden ist, um die Zufuhr von Rauchgasen (301) aus dem Ofen (300) zu der Rückgewinnungsanlage (400, 500, 600) zu ermöglichen,
- der Auslass des erwärmten Wärmeträgerfluids (402) aus der Anlage zur Rückgewinnung von thermischer Energie (400, 500, 600) mit dem Synthesereaktor (100) von Synthesegas verbunden ist, um die Zufuhr mindestens eines Teils des erwärmten Wärmeträgerfluids (402) zum Synthesereaktor (100) zu ermöglichen.

## Claims

1. Method for heating by combustion, method wherein:
(a) a load to be heated is inserted in a furnace,
(b) fuel is burned with oxidant generating heat and smoke in the furnace (300),
(c) the load is heated in the furnace (300) with the generated heat,
(d) the heated load and the generated smoke are evacuated from the furnace (300), the evacuated smoke (301) containing residual heat energy,
(e) syngas (110) is produced in a synthesis reactor (100) by endothermal chemical reaction between the reagents including (i) a carbon material and (ii) steam (102) and/or CO₂, the synthesis reactor comprising at least one reaction zone into which reagents are introduced and in which the endothermal chemical reaction takes place and from which the produced syngas is extracted,
**characterised in that**:
• residual heat energy from the evacuated smoke (301) is recovered from the furnace (300), at least some of the residual heat energy thus recovered being inserted into the synthesis reactor (100) and consumed by the endothermal chemical reaction of step (e), and
• at least some of the fuel burned in the furnace in step (b) is syngas (110, 210) produced in step (e).

2. Method according to claim 1, wherein the synthesis reactor (100) also comprises at least one heating enclosure into which said at least some of the recovered residual heat energy is introduced, said at least one heating enclosure being positioned with respect to the at least one reaction zone such that the recovered residual heat energy is transferred from the at least one heating enclosure to the endothermal chemical reaction in the at least one reaction zone through at least one separation wall between the at least one heating enclosure and the at least one reaction zone.

3. Method according to claim 2, wherein each reaction zone is surrounded by a heating enclosure, next to or housed between two neighbouring heating enclosures.

4. Method according to claim 2 or 3, wherein the synthesis reactor (100) has a lamellar structure comprising an alternance of heating enclosures and reaction zones, said heating enclosures and reaction zones being located between two successive strips.

5. Method according to claim 1, wherein the residual heat energy is recovered from the smoke evacuated (301, 501) by heat exchange between the evacuated smoke (301, 501) and a heat-transfer fluid (602, 401) so as to obtain temperate smoke (601) and heated heat-transfer fluid (402) containing the recovered residual heat energy, at least some of the heated heat-transfer fluid (402) being inserted into the synthesis reactor (100) in order to supply the at least some of the recovered residual heat energy to the endothermal chemical reaction of step (e).

6. Method according to any one of claims 2 to 4, wherein the residual heat energy is recovered from the evacuated smoke (301, 501) by heat exchange between the evacuated smoke (301, 501) and a heat-transfer fluid (602, 401) so as to obtain temperate smoke (601) and heated heat-transfer fluid (402) containing the recovered residual heat energy, at least some of the heated heat-transfer fluid (402) being inserted into the at least one heating enclosure in order to supply the at least some of the recovered residual heat energy to the endothermal chemical reaction of step (e) through the at least one separation wall.

7. Method according to any one of claims 1 to 6, wherein the evacuated smoke is loaded with dust and/or volatile substances likely to condense at temperatures of between 600°C and 800°C and wherein the step of recovering residual heat energy from the smoke (301) evacuated from the furnace (300) comprises at least one first recovery phase at a first range of temperatures of smoke and a second recovery phase at a second range of temperatures of smoke, lower than the first range and wherein:
• at the temperatures of the first range of temperatures, there is no condensation of volatile substances present in the smoke, and
• the smoke is subjected to a cleaning between the first and the second recovery phase, said cleaning comprising the removal of dust and/or of volatile substances which are likely to condense at temperatures of the second range of temperatures.

8. Method according to claim 7, wherein a heat-transfer fluid (602) is heated partially by heat exchange between the smoke (501) in the second recovery phase and wherein the partially heated heat-transfer fluid (603, 401) is heated in the first recovery phase by heat exchange with the smoke (301) in the first recovery phase.

9. Method according to claim 7 or 8, wherein the heat-transfer fluid is selected from among air, nitrogen and steam (102).

10. Heating method according to any one of the preceding claims, wherein in the furnace (300), at least some and preferably all of the fuel is burned with an oxygen-rich oxidant.

11. Method according to claim 8, wherein the furnace (300) is a vitrification furnace or a metal melting furnace.

12. Method according to one of the preceding claims, wherein the endothermal chemical reaction is SMR or DMR or a mixture of the two.

13. Method according to any one of the preceding claims, wherein some of the heat energy recovered from the evacuated smoke is used for at least one and preferably more of the following purposes:
a) to preheat the carbon material before the use thereof as a reagent in the endothermal chemical reaction;
b) to generate and/or overheat the steam before the use thereof as a reagent in the endothermal chemical reaction;
c) to preheat CO₂ before the use thereof as a reagent in the endothermal chemical reaction;
d) to preheat the oxidant upstream of the use thereof for combustion or fuel.

14. Method according to any one of the preceding claims, wherein water is extracted from the syngas by condensation before the use thereof as a fuel in the furnace (300).

15. Heating installation suitable for the implementation of the method according to any one of the preceding claims, said installation comprising:
- a furnace (300) equipped with an inlet for a load to be heated, an outlet for the heated load, one or more burners for the combustion of a fuel with an oxidant and the generation of heat to heat the load and at least one smoke outlet,
- an installation (400, 500, 600) for recovering heat energy by heat exchange between the smoke evacuated (301) and a heat-transfer fluid (602) and comprising a heated heat-transfer fluid outlet, and
- a syngas synthesis reactor (100),
**characterised in that**:
- the synthesis reactor (100) is connected to the furnace (300) so as to make it possible to supply syngas (210) produced in the reactor (100) as a fuel to at least one burner of the furnace (300);
- the smoke outlet of the furnace (300) is connected to the installation for recovering heat energy (400, 500, 600) so as to make it possible to supply smoke (301) coming from the furnace (300) to said recovery installation (400, 500, 600),
- the outlet of the heated heat-transfer fluid (402) of the installation for recovering heat energy (400, 500, 600) is connected to the syngas synthesis reactor (100) so as to make it possible to supply at least some of the heated heat-transfer fluid (402) to the synthesis reactor (100).
